(19) Europäisches Patentamt
European Patent Office
Office européen des brevets

(11) EP 2 228 535 A2

(12) EUROPÄISCHE PATENTANMELDUNG

(43) Veröffentlichungstag:
15.09.2010 Patentblatt 2010/37

(51) Int Cl.:
F03D 3/06 (2006.01)     F03D 9/00 (2006.01)

(21) Anmeldenummer: 10155942.5

(22) Anmeldetag: 09.03.2010

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA ME RS

(30) Priorität: 10.03.2009 CH 3902009

(71) Anmelder: Farjon, Kolja
6300 Zug (CH)

(72) Erfinder: Farjon, Kolja
6300 Zug (CH)

(74) Vertreter: Falk, Urs
Patentanwaltsbüro Dr. Urs Falk
Eichholzweg 9A
6312 Steinhausen (CH)

(54) **Windrad oder Wasserrad**

(57)     Ein Windrad oder Wasserrad hat zwei an einer Welle (5) angebrachte Scheiben (3), zwischen denen in regelmässigen Abständen mindestens zwei gebogene Schaufeln (4) angebracht sind. Jede der Schaufeln (4; 4.1, 4.2) hat eine gekrümmte Fläche, die ein Teil der Mantelfläche eines kreisförmigen Zylinders mit einer Zylinderachse (7; 7.1, 7.2) und mit einem Grundflächenradius $r_1$ ist, wobei der Teil der Mantelfläche durch zwei gerade Seiten und zwei gebogene Seiten begrenzt wird. Die erste gerade Seite verläuft im Abstand $D_1$ parallel zur Welle (5) und die zweite gerade Seite verläuft im Abstand $D_2$ parallel zur Welle (5). Die Zylinderachse (7; 7.1, 7.2) des Zylinders verläuft in einem Abstand A parallel zur Welle (5), der gleich dem Grundflächenradius $r_1$ ist. Der Abstand $D_1$ weist einen Wert auf, der zwischen den Werten $\frac{1}{2} r_1$ und $(\sqrt{3}-1) r_1$ liegt und der Abstand $D_2$ weist den Wert $D_2 = \sqrt{3} r_1$ auf.

Fig. 3

EP 2 228 535 A2

**Beschreibung**

Die Erfindung betrifft ein Windrad und ein Wasserrad für die Erzeugung von elektrischer Energie durch Wind bzw. fliessendes Wasser.

Die Erfindung ist im Anspruch 1 gekennzeichnet. Weiterbildungen der Erfindung ergeben sich aus den abhängigen Ansprüchen.

Die Erfindung wird nachfolgend anhand eines Ausführungsbeispiels und anhand der Zeichnung näher erläutert.

Fig. 1      zeigt ein erfindungsgemässes Windrad in seitlicher Ansicht,

Fig. 2      zeigt einen Schnitt entlang der Linie I-I der Fig. 1,

Fig. 3 und 4    illustrieren Einzelheiten der Geometrie der Schaufeln des Windrads.

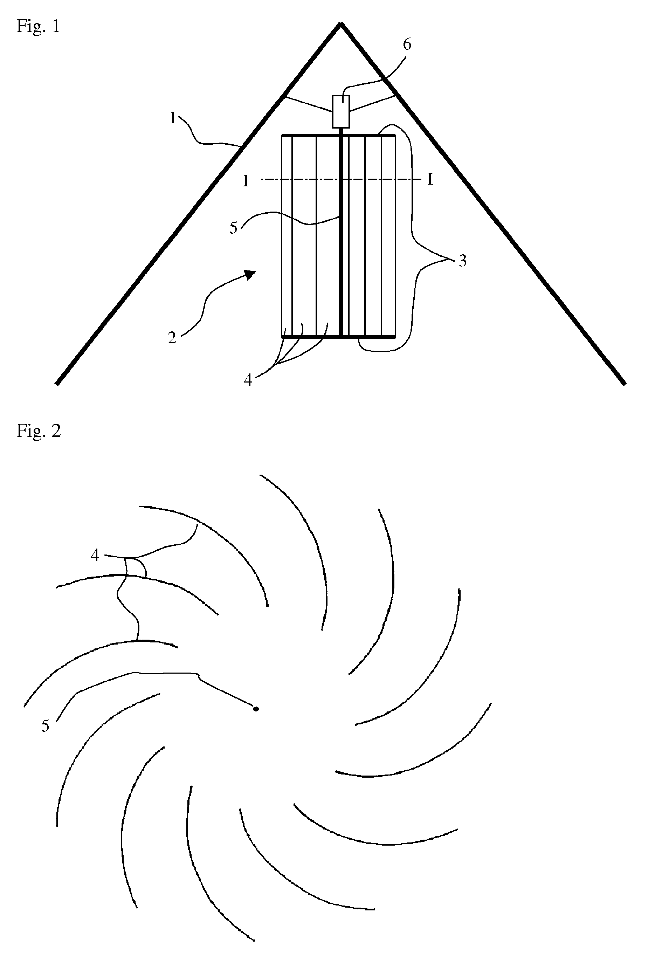

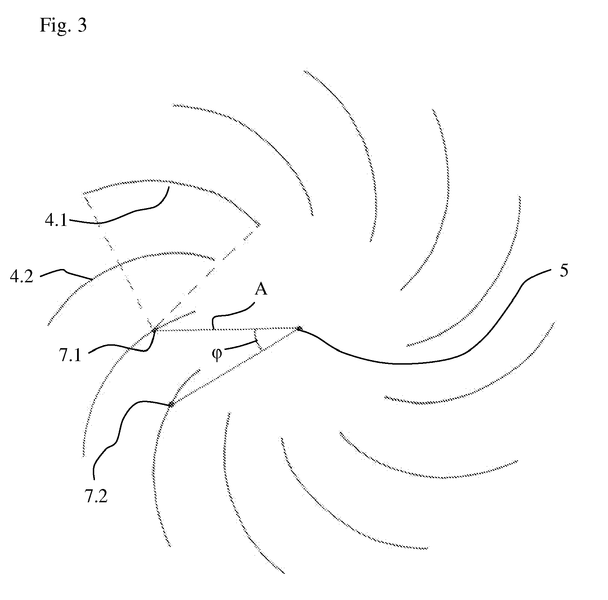

Das erfindungsgemässe Windrad ist um eine bei Windstille in vertikaler Richtung verlaufende Drehachse drehbar und wird an einem Traggerüst aufgehängt. Die Fig. 1 zeigt das am Traggerüst 1 aufgehängte Windrad 2 in seitlicher Ansicht. Das Windrad 2 besteht aus einer Welle 5, deren Längsachse die Drehachse ist, zwei im Abstand zueinander an der Welle 5 angebrachten Scheiben 3, wobei die Welle 5 senkrecht zu den beiden Scheiben 3 verläuft, und mindestens zwei gebogenen Schaufeln 4, die zwischen den beiden Scheiben 3 angebracht sind. Die Umhüllende des Windrads 2 ist ein Zylinder. Die Fig. 2 zeigt das Windrad 2 in einem senkrecht zur Welle 5 und somit senkrecht zur Drehachse durch die Schaufeln 4 hindurch verlaufenden Schnitt, d.h. in einem Schnitt entlang der Linie I-I der Fig. 1. Die Anzahl n der Schaufeln 4 beträgt vorzugsweise wie dargestellt n = 12, kann jedoch auch n = 2, 4 oder 6 betragen. Die Schaufeln 4 sind gleichartig und sind in regelmässigen Abständen um die Welle 5 herum angeordnet. Ihre geometrischen Eigenschaften und ihre Orientierung in Bezug auf die Welle 5 werden anhand der folgenden Fig. 3 bis Fig. 4 im Detail erläutert.

Jede der Schaufeln 4 hat eine gekrümmte Fläche, die ein Teil der Mantelfläche eines kreisförmigen Zylinders ist, dessen Grundflächenradius den Wert $r_1$ hat und dessen Zylinderachse 7 im Abstand $A = r_1$ parallel zur Welle 5 verläuft. Der Krümmungsradius der Fläche der Schaufeln 4 ist somit gleich dem Grundflächenradius $r_1$. Die Fläche der Schaufeln 4 ist also ein Ausschnitt einer zylinderförmigen Fläche. Die Fig. 3 zeigt die Zylinderachsen 7.1 und 7.2 von zwei benachbarten Schaufeln 4.1 und 4.2, wobei gestrichelte Linien die Zuordnung zwischen der Schaufel 4.1 und der Zylinderachse 7.1 zeigen. Die Zylinderachsen 7 der Schaufeln 4 liegen also auf einem (nicht dargestellten) Kreis, wobei von der Welle 5 aus gesehen der Winkelabstand zwischen den Zylinderachsen $\varphi = 360°/n$ beträgt, hier mit n = 12 also $\varphi$ = 30°.

In anderen Worten ausgedrückt lässt sich folgendes sagen: Die Schaufeln 4 haben eine gekrümmte Fläche, die ein Teil der Mantelfläche eines Zylinders ist, der sich parallel zur Welle 5 erstreckt. Der Zylinder hat den Grundflächenradius $r_1$ und seine Zylinderachse befindet sich auf einem Kreis mit einem Radius, der gleich dem Grundflächenradius $r_1$ des Zylinders ist, wobei die Welle 5 den Mittelpunkt des Kreises durchstösst.

Die Grösse und Orientierung der Schaufeln 4 in Bezug auf die Welle 5 sind wie folgt festgelegt:

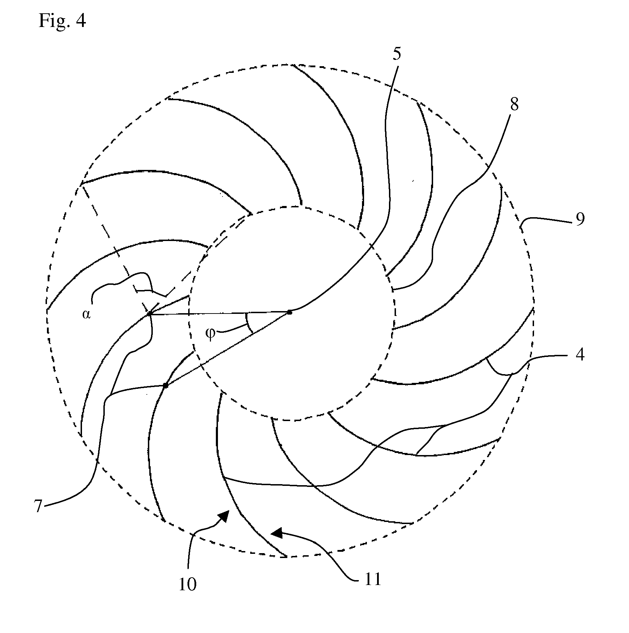

Die gekrümmte Fläche einer Schaufel 4 wird somit durch zwei gerade Seiten und zwei gebogene Seiten begrenzt. Die geraden Seiten verlaufen parallel zur Welle 5, die gebogenen Seiten verlaufen parallel zu den Scheiben 3 und sind an diesen befestigt. In der Schnittdarstellung gemäss der Fig. 4 schneidet die erste der beiden geraden Seiten einen Innenkreis 8 mit dem Radius $r_2$, die zweite der beiden geraden Seiten schneidet einen Aussenkreis 9 mit dem Radius $r_3$, wobei der Innenkreis 8 und der Aussenkreis 9 konzentrisch zur Welle 5 verlaufen. Die Schaufeln 4 befinden sich somit im Raum zwischen dem Innenkreis 8 und dem Aussenkreis 9. Der Radius $r_3$ weist den Wert $r_3 = \sqrt{3}\, r_1$ auf. Der Radius $r_2$ weist einen Wert auf, der zwischen den Werten ½ $r_1$ und $\left(\sqrt{3} - 1\right)$ liegt. Der bevorzugte, weil optimale Radius $r_2$ für ein Windrad beträgt $r_2 = \left(\sqrt{3} - 1\right) r_1$. Dieses Optimum ist in den Figuren Fig. 2 bis 4 dargestellt. Wie aus der Fig. 4 ersichtlich ist, berühren die Endpunkte der gebogenen Seiten der Schaufeln 4 den Innenkreis 8 und den Aussenkreis 9, sie schneiden weder den Innenkreis 8 noch den Aussenkreis 9. Der von einer Schaufel 4 aufgespannte Winkel $\alpha$ hängt ab vom Radius $r_2$ des Innenkreises 8 und liegt im Bereich zwischen 75° und 90°, im optimalen Fall mit $r_2 = \left(\sqrt{3} - 1\right) r_1$ beträgt der Winkel $\alpha$ = 75°.

In anderen Worten ausgedrückt: Die erste der beiden geraden Seiten verläuft im Abstand $D_1 = r_2$ parallel zur Welle 5, die zweite der beiden geraden Seiten verläuft im Abstand $D_2 = r_3$ parallel zur Welle 5.

Ein Windrad mit einem Aussendurchmesser von 43 cm und einer Höhe von 300 cm mit 12 Schaufeln von etwa 16.7 cm * 300 cm Fläche hat eine Gesamtfläche von etwa 6 m². Das konvex-konkave Profil der Schaufeln 4 komprimiert die Luft etwa im Verhältnis 1:2.4. Die durch die dem Wind ausgesetzten Schaufeln in das Windrad eintretende Luft wird also verdichtet und treibt als Druckluft auch die im Windschatten liegenden Schaufeln an. Das Windrad dreht bereits ab einer Windgeschwindigkeit von 0.8 Metern pro Sekunde.

Es ist auch möglich, zwei oder mehr Windräder am gleichen Traggerüst aufzuhängen, wobei die Windräder je eine eigene Welle und einen eigenen Generator oder eine gemeinsame Welle und einen gemeinsamen Generator haben können.

Ein solches Windrad kann auch als Wasserrad verwendet werden, allerdings beträgt dann die Anzahl n der Schaufeln bevorzugt nur n = 6.

Das Windrad 2 kann gleichzeitig als Photovoltaikanlage ausgebildet sein, indem auf die konvexe Seite 10 der Schaufeln 4 ein Solarmodul aufgebracht wird, das Licht der Sonne direkt in elektrische Energie umwandelt, und indem die konkave Seite 11 der Schaufeln 4 als spiegelnde Fläche ausgebildet wird, die auftreffendes Licht auf das Solarmodul der gegenüberliegenden Schaufel reflektiert. In der Fig. 4 ist die konvexe Seite der Schaufeln 4 mit dem Bezugszeichen 10, die konkave Seite der Schaufeln 4 mit dem Bezugszeichen 11 bezeichnet.

Die Schaufeln 4 bestehen vorzugsweise aus einem leichten, aber stabilen Material, beispielsweise Aluminium.

## Patentansprüche

1. Windrad oder Wasserrad, mit zwei an einer Welle (5) angebrachten Scheiben (3), zwischen denen in regelmässigen Abständen mindestens zwei gebogene Schaufeln (4) angebracht sind, wobei jede der Schaufeln (4; 4.1, 4.2) eine gekrümmte Fläche hat, die ein Teil der Mantelfläche eines kreisförmigen Zylinders mit einer Zylinderachse (7; 7.1, 7.2) und mit einem Grundflächenradius $r_1$ ist, wobei der Teil der Mantelfläche durch zwei gerade Seiten und zwei gebogene Seiten begrenzt wird, wobei die erste gerade Seite im Abstand $D_1$ parallel zur Welle (5) und die zweite gerade Seite im Abstand $D_2$ parallel zur Welle (5) verläuft, **dadurch gekennzeichnet, dass** die Zylinderachse (7; 7.1, 7.2) des Zylinders in einem Abstand A parallel zur Welle (5) verläuft, der gleich dem Grundflächenradius $r_1$ ist, dass der Abstand $D_1$ einen Wert aufweist, der zwischen den Werten ½ $r_1$ und $\left(\sqrt{3}-1\right) r_1$ liegt und dass der Abstand $D_2$ den Wert $D_2 = \sqrt{3}\, r_1$ aufweist.

2. Windrad nach Anspruch 1, **dadurch gekennzeichnet, dass** die Anzahl n der Schaufeln (4) n = 12 beträgt.

3. Windrad Anspruch 1 oder 2, **dadurch gekennzeichnet, dass** der Abstand $D_1$ den Wert $D_1 = \left(\sqrt{3}-1\right) r_1$ hat.

4. Windrad nach einem der Ansprüche 1 bis 3, **dadurch gekennzeichnet, dass** auf die konvexe Seite der Schaufeln (4) ein Solarmodul aufgebracht ist, das Licht der Sonne direkt in elektrische Energie umwandelt, und dass die konkave Seite der Schaufeln (4) als spiegelnde Fläche ausgebildet ist.

5. Wasserrad nach Anspruch 1, **dadurch gekennzeichnet, dass** die Anzahl n der Schaufeln (4) n = 6 beträgt.

Fig. 1

Fig. 2

Fig. 3

Fig. 4